(19) Europäisches Patentamt
European Patent Office
Office européen des brevets

(11) EP 2 902 371 A1

(12) EUROPEAN PATENT APPLICATION
published in accordance with Art. 153(4) EPC

(43) Date of publication:
05.08.2015 Bulletin 2015/32

(21) Application number: 13840334.0

(22) Date of filing: 30.09.2013

(51) Int Cl.:
*C03C 27/12* (2006.01) *B32B 17/10* (2006.01)
*B32B 27/30* (2006.01) *C08K 5/12* (2006.01)
*C08L 29/14* (2006.01)

(86) International application number:
PCT/JP2013/076531

(87) International publication number:
WO 2014/051139 (03.04.2014 Gazette 2014/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 28.09.2012 JP 2012218734
28.09.2012 JP 2012218739

(71) Applicant: Sekisui Chemical Co., Ltd.
Osaka-shi, Osaka 530-0047 (JP)

(72) Inventors:
- OOTA Yuusuke
Koka-shi
Shiga 528-8585 (JP)
- IZU Yasuyuki
Koka-shi
Shiga 528-8585 (JP)
- NAKAJIMA Daisuke
Koka-shi
Shiga 528-8585 (JP)
- FUKATANI Juichi
Tokyo 105-8450 (JP)

(74) Representative: Hart-Davis, Jason et al
Cabinet Beau de Loménie
158, rue de l'Université
75340 Paris Cedex 07 (FR)

# (54) INTERMEDIATE FILM FOR LAMINATED GLASS, AND LAMINATED GLASS

(57) An object of the present invention is to provide an interlayer film for laminated glass which produces a high contrast image under light radiation, is less susceptible to color changes, and allows for control of the adhesion. Another object of the present invention is to provide a laminated glass including the interlayer film for laminated glass.

The present invention provides an interlayer film for laminated glass which includes: a light emitting layer; and a first resin layer on or above one surface of the light emitting layer, the light emitting layer containing a polyvinyl acetal and a light emitting material having a terephthalic acid ester structure, and having a magnesium element concentration of 80 ppm or less, the first resin layer containing a polyvinyl acetal and an adhesion control agent.

EP 2 902 371 A1

## Description

### TECHNICAL FIELD

The present invention relates to an interlayer film for laminated glass which produces a high contrast image under light radiation, is less susceptible to color changes, and allows for control of the adhesion. The present invention further relates to a laminated glass including the interlayer film for laminated glass.

### BACKGROUND ART

Laminated glass has a variety of uses, such as in front, side and rear windshields of vehicles (e.g. automobiles) and windowpanes of aircraft, buildings, and the like, because it is a form of safety glass that is less likely to scatter even when shattered by external impact. A known example of laminated glass is a laminated glass including at least a pair of glass plates integrated through, for example, an interlayer film for laminated glass which contains a liquid plasticizer and a polyvinyl acetal resin.

A recent growing need is the development of a head-up display (HUD) that presents meters showing vehicle driving data (e.g. driving speed information) within a usual range of vision in the front windshield of a vehicle.

There have been known various types of HUDs. The most typical one is a HUD that is designed such that a display unit of an instrumental panel projects information (e.g. driving speed information) sent from a control unit onto a front windshield to enable a driver to view the information at a usual viewpoint, that is, within a usual range of vision in the front windshield.

An example of laminated glass interlayer films for a HUD is a wedge-shaped laminated glass interlayer film with a predetermined wedge shape proposed in Patent Literature 1. This interlayer film can solve a HUDs' problem that a meter image displayed on a laminated glass appears double.

Patent Literature 1 also discloses a laminated glass that is partially free from the HUDs' problem that a meter image appears double. Yet, not the entire surface of the laminated glass is free from the double meter image problem.

Patent Literature 2 discloses a laminated glass including a laminate of an interlayer containing hydroxy terephthalate between two transparent plates. Patent Literature 2 also discloses a laminated glass that produces a high contrast image under light radiation. Unfortunately, in the case of such a laminated glass including an interlayer containing hydroxy terephthalate, the interlayer is susceptible to color changes.

### CITATION LIST

- Patent Literature

Patent Literature 1: JP H4-502525 T
Patent Literature 2: WO 2010/139889

### SUMMARY OF INVENTION

- Technical Problem

An object of the present invention is to provide an interlayer film for laminated glass which produces a high contrast image under light radiation, is less susceptible to color changes, and allows for control of the adhesion. Another object of the present invention is to provide a laminated glass including the interlayer film for laminated glass.

- Solution to Problem

The present invention provides an interlayer film for laminated glass which includes: a light emitting layer; and a first resin layer directly or indirectly arranged on one surface of the light emitting layer, the light emitting layer containing a polyvinyl acetal and a light emitting material having a terephthalic acid ester structure, and having a magnesium element concentration of 80 ppm or less, the first resin layer containing a polyvinyl acetal and an adhesion control agent.

The following description is offered to demonstrate the present invention.

The present inventors have found that an interlayer film for laminated glass which includes a light emitting layer containing a polyvinyl acetal and a light emitting material having a terephthalic acid ester structure, and having a magnesium element concentration of 80 ppm or less, and a first resin layer containing a polyvinyl acetal and an adhesion

control agent directly or indirectly arranged on one surface of the light emitting layer produces a high contrast image under light radiation, is less susceptible to color changes, and allows for control of the adhesion. This has led to the completion of the present invention.

The interlayer film for laminated glass of the present invention includes a light emitting layer containing a polyvinyl acetal and a light emitting material having a terephthalic acid ester structure, and having a magnesium element concentration of 80 ppm or less. Typically, interlayer films for laminated glass contain a magnesium-containing compound as an adhesion control agent for controlling the adhesion of the interlayer films for laminated glass to glass. The present inventors found a problem that the use of a light emitting material having a terephthalic acid ester structure in combination with a magnesium-containing compound results in an interlayer film for laminated glass which undergoes a color change. However, the presence of a light emitting layer containing a polyvinyl acetal and a light emitting material having a terephthalic acid ester structure, and having a magnesium element concentration within a specific range allows for display of a high contrast image, and prevents color changes. Additionally, the presence of a first resin layer containing a polyvinyl acetal and an adhesion control agent besides the light emitting layer allows for control of the adhesion of the interlayer film for laminated glass.

The interlayer film for laminated glass of the present invention includes the light emitting layer and a first resin layer directly or indirectly arranged on one surface of the light emitting layer.

The first resin layer may be arranged indirectly on one surface of the light emitting layer, or may be laminated directly on one surface of the light emitting layer. Another layer may be inserted between the light emitting layer and the first resin layer. Preferably, a second resin layer containing a polyvinyl acetal and an adhesion control agent is further provided directly or indirectly on the other surface of the light emitting layer in order to further facilitate control of the adhesion of the interlayer film for laminated glass. The second resin layer may be arranged indirectly on the other surface of the light emitting layer, or may be laminated directly on the other surface of the light emitting layer. Another layer may be inserted between the light emitting layer and the second resin layer. In the interlayer film for laminated glass of the present invention, it is preferable that the first resin layer, the light emitting layer, and the second resin layer are arranged in the stated order, and more preferable that the first resin layer, the light emitting layer, and the second resin layer are laminated in the stated order. In order to further facilitate control of the adhesion of the interlayer film for laminated glass of the present invention, the first resin layer and the second resin layer constitute the outermost layers of the interlayer film for laminated glass of the present invention.

The light emitting layer contains a polyvinyl acetal.

The polyvinyl acetal is not particularly limited, as long as it is obtained by acetalization of polyvinyl alcohol with an aldehyde. Preferred is polyvinyl butyral. Two or more polyvinyl acetals may be used as needed.

As for the degree of acetalization of the polyvinyl acetal, the preferable lower limit is 40 mol%, the preferable upper limit is 85 mol%, the more preferable lower limit is 60 mol%, and the more preferable upper limit is 75 mol%.

As for the hydroxyl group content of the polyvinyl acetal, the preferable lower limit is 15 mol%, and the preferable upper limit is 35 mol%. When the hydroxyl group content is 15 mol% or more, the interlayer film for laminated glass can be easily formed; when the hydroxyl group content is 35 mol% or less, the interlayer film for laminated glass is easy to handle.

The degree of acetalization and the hydroxyl group content can be measured in accordance with, for example, JIS K 6728, "Testing method for polyvinyl butyral".

The polyvinyl acetal can be prepared by acetalization of polyvinyl alcohol with an aldehyde. The polyvinyl alcohol is typically prepared by saponification of polyvinyl acetate, and a polyvinyl alcohol having a degree of saponification of 70 to 99.8 mol% is generally used.

As for the degree of polymerization of the polyvinyl alcohol, the preferable lower limit is 500, and the preferable upper limit is 4000. A polyvinyl alcohol with a degree of polymerization of 500 or more provides penetration resistance to a laminated glass to be formed. In the case of a polyvinyl alcohol with a degree of polymerization of 4000 or less, the interlayer film for laminated glass can be easily formed. The more preferable lower limit of the degree of polymerization of the polyvinyl alcohol is 1000, and the more preferable upper limit is 3600.

The aldehyde is not particularly limited, and typically, a C1 to C10 aldehyde is suitable. The C1 to C10 aldehyde is not particularly limited, and examples include n-butyl aldehyde, isobutyl aldehyde, n-valeraldehyde, 2-ethyl butyl aldehyde, n-hexyl aldehyde, n-octyl aldehyde, n-nonyl aldehyde, n-decyl aldehyde, formaldehyde, acetaldehyde, and benzaldehyde. Preferred among these are n-butyl aldehyde, n-hexyl aldehyde, and n-valeraldehyde, and more preferred is n-butyl aldehyde. Any of these aldehydes may be used alone, or two or more of them may be used in combination.

The light emitting layer contains a light emitting material having a terephthalic acid ester structure.

The light emitting material having a terephthalic acid ester structure emits light under light radiation. The light radiation is not particularly limited, as long as it excites the light emitting material having a terephthalic acid ester structure to cause it to emit light. Examples include ultraviolet radiation and infrared radiation.

Examples of the light emitting material having a terephthalic acid ester structure include a compound having a structure represented by the following formula (1) and a compound having a structure represented by the following

formula (2). Any of these may be used alone, or two or more of these may be used in combination.

[Chem. 1]

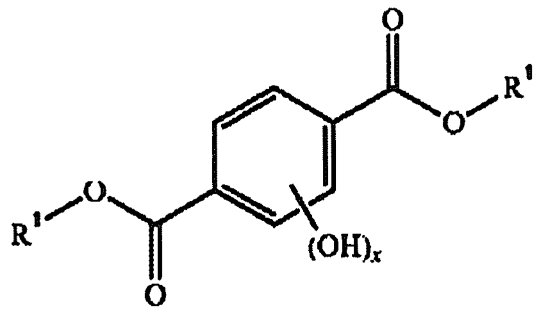

(1)

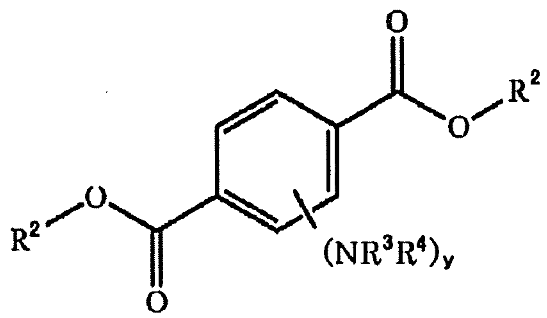

(2)

In the formula (1), $R^1$ is an organic group, and x is 1, 2, 3 or 4. In order to ensure that the interlayer film for laminated glass has much higher transparency, it is preferable that x is 1 or 2, more preferable that the benzene ring has a hydroxyl group at a 2- or 5-position, and still more preferable that the benzene ring has hydroxyl groups at the 2- and 5-positions.

The organic group of $R^1$ is preferably a hydrocarbon group, more preferably a C1 to C10 hydrocarbon group, still more preferably a C1 to C5 hydrocarbon group, and particularly preferably a C1 to C3 hydrocarbon group. In the case of a hydrocarbon group with 10 or less carbon atoms, the light emitting material having a terephthalic acid ester structure can be easily dispersed in the interlayer film for laminated glass. The hydrocarbon is preferably an alkyl group.

Examples of the compound having a structure represented by the formula (1) include diethyl-2,5-dihydroxy terephthalate and dimethyl-2,5-dihydroxy terephthalate. In particular, the compound having a structure represented by the formula (1) is preferably diethyl-2,5-dihydroxy terephthalate ("diethyl-2,5-dihydroxyterephthalate" from Aldrich) because it allows for display of an image with a much higher contrast.

In the formula (2), $R^2$ is an organic group, $R^3$ and $R^4$ are individually a hydrogen atom or an organic group, and y is 1, 2, 3 or 4.

The organic group of $R^2$ is preferably a hydrocarbon group, more preferably a C1 to C10 hydrocarbon group, still more preferably a C1 to C5 hydrocarbon group, and particularly preferably a C1 to C3 hydrocarbon group. When the carbon number of the hydrocarbon group is the upper limit or less, the light emitting material having a terephthalic acid ester structure can be easily dispersed in the interlayer film for laminated glass. The hydrocarbon is preferably an alkyl group.

In the formula (2), $NR^3R^4$ is an amino group. Preferably, $R^3$ and $R^4$ are individually a hydrogen atom. The amino group may be substituted for one of the hydrogen atoms of the benzene ring of the compound having a structure represented by the formula (2), or may be substituted for two, three, or four of the hydrogen atoms.

The compound having a structure represented by the formula (2) is preferably diethyl-2,5-diamino terephthalate (from Aldrich) because it allows for display of an image with a much higher contrast.

The amount of the light emitting material having a terephthalic acid ester structure is not particularly limited, but the preferable lower limit is 0.001 parts by weight for 100 parts by weight of the polyvinyl acetal, and the preferable upper limit is 15 parts by weight. When the amount of the light emitting material having a terephthalic acid ester structure is 0.001 parts by weight or more, the interlayer film for laminated glass can produce an image with a much higher contrast under light radiation; when the amount of the light emitting material having a terephthalic acid ester structure is 15 parts

by weight or less, the interlayer film for laminated glass has much higher transparency. The more preferable lower limit of the amount of the light emitting material having a terephthalic acid ester structure is 0.01 parts by weight, the more preferable upper limit is 10 parts by weight, the still more preferable lower limit is 0.1 parts by weight, the still more preferable upper limit is 8 parts by weight, the particularly preferable lower limit is 0.5 parts by weight, and the particularly preferable upper limit is 5 parts by weight.

As for the amount of the light emitting material having a terephthalic acid ester structure, the preferable lower limit is 0.007% by weight for 100% by weight of the light emitting layer, and the preferable upper limit is 4.5% by weight. When the amount of the light emitting material having a terephthalic acid ester structure is 0.007% by weight or more, display of an image with a much higher contrast is enabled; when the amount of the light emitting material having a terephthalic acid ester structure is 4.5% by weight or less, the interlayer film for laminated glass has much higher transparency. The more preferable lower limit of the amount of the light emitting material having a terephthalic acid ester structure is 0.01% by weight, the more preferable upper limit is 4% by weight, the still more preferable lower limit is 0.1% by weight, and the still more preferable upper limit is 3.5% by weight.

The magnesium element concentration of the light emitting layer is 80 ppm or less. As long as the magnesium element concentration of the light emitting layer is 80 ppm or less, the interlayer film for laminated glass is less susceptible to color changes. A possible cause of color changes of the interlayer film for laminated glass is a complex formation of the light emitting material having a terephthalic acid ester structure and magnesium. The light emitting layer may be free from magnesium. In order to more effectively prevent color changes of the interlayer film for laminated glass, the magnesium element concentration of the light emitting layer is preferably 75 ppm or less, more preferably 60 ppm or less, still more preferably 50 ppm or less, particularly preferably 40 ppm or less, most preferably 30 ppm or less, and further most preferably 25 ppm or less. The magnesium element concentration of the light emitting layer may be 0 ppm. The magnesium may be present as magnesium metal or a magnesium salt in the light emitting layer.

The term "color change" means that when the interlayer film for laminated glass is inserted between two clear glass plates (thickness: 2.5 mm), the resulting laminated glass has a YI value of more than 20. The YI value can be determined with a spectrophotometer (U-4100 from Hitachi High-Technologies Corporation) in accordance with JIS Z 8722. The YI value is preferably 20 or less, more preferably 15 or less, and still more preferably 10 or less. Also preferably, the YI value is 0 or more.

In order to more effectively prevent color changes of the interlayer film for laminated glass, the light emitting layer preferably contains lithium element at a concentration of 25 ppm or less. If the light emitting layer contains a large amount of lithium, a possible cause of color changes of the interlayer film for laminated glass is a complex formation of the light emitting material having a terephthalic acid ester structure and lithium. The more preferable upper limit of the lithium element concentration of the light emitting layer is 20 ppm, the still more preferable upper limit is 10 ppm, the preferable lower limit is 0 ppm, and the more preferable lower limit is 1 ppm.

The light emitting layer preferably further contains a dispersant. The presence of a dispersant prevents the light emitting material having a terephthalic acid ester structure from aggregating, and allows for more uniform light emission. Examples of the dispersant include compounds having a sulfonic acid structure such as salts of a linear alkylbenzenesulfonic acid, compounds having an ester structure such as diester compounds, alkyl esters of recinoleic acid, phthalic acid esters, adipic acid esters, sebacic acid esters, and phosphoric acid esters, compounds having an ether structure such as polyoxyethylene glycol, polyoxypropylene glycol, and alkylphenyl-polyoxyethylene-ethers, compounds having a carboxylic acid structure such as polycarboxylic acids, compounds having an amine structure such as laurylamine, dimethyllaurylamine, oleyl propylene diamine, polyoxyethylene secondary amines, polyoxyethylene tertiary amines, and polyoxyethylene diamines, compounds having a polyamine structure such as polyalkylene polyamine alkylene oxides, compounds having an amide structure such as oleic acid diethanolamide and fatty acid alkanolamides, and compounds having a high molecular weight amide structure such as polyvinyl pyrrolidone and polyester acid amide amine salts. Other examples include high molecular weight dispersants such as polyoxyethylene alkyl ether phosphates (salts), polycarboxylic acid polymers, and condensed ricinoleic acid esters. The term "high molecular weight dispersant" is defined as referring to dispersants having a molecular weight of 10000 or higher.

In the case where the dispersant is used, the preferable lower limit of the amount of the dispersant in the light emitting layer is 1 part by weight for 100 parts by weight of the light emitting material having a terephthalic acid ester structure in the light emitting layer, and the preferable upper limit is 50 parts by weight. When the amount of the dispersant is within the range, the light emitting material having a terephthalic acid ester structure can be homogeneously dispersed in the light emitting layer. The more preferable lower limit of the amount of the dispersant is 3 parts by weight, the more preferable upper limit is 30 parts by weight, the still more preferable lower limit is 5 parts by weight, and the still more preferable upper limit is 25 parts by weight.

The light emitting layer preferably further contains an ultraviolet absorber. The presence of an ultraviolet absorber in the light emitting layer improves the lightfastness of the light emitting layer. The light emitting layer may not contain any ultraviolet absorber. In order to ensure that the interlayer film for laminated glass can produce an image with a much higher contrast, the preferable upper limit of the amount of the ultraviolet absorber in the light emitting layer is 1 part by

weight for 100 parts by weight of the polyvinyl acetal, the more preferable upper limit is 0.5 parts by weight, the still more preferable upper limit is 0.2 parts by weight, and the particularly preferable upper limit is 0.1 parts by weight.

Examples of the ultraviolet absorber include compounds having an malonic acid ester structure, compounds having an oxalic anilide structure, compounds having a benzotriazole structure, compounds having a benzophenone structure, compounds having a triazine structure, compounds having a benzoate structure, and compounds having a hindered amine structure.

The light emitting layer may further contain a plasticizer as needed. The plasticizer is not particularly limited, and examples include organic ester plasticizers such as monoprotic organic acid esters and polyprotic organic acid esters, and phosphoric acid plasticizers such as organic phosphoric acid plasticizers and organic phosphorous acid plasticizers. The plasticizer is preferably a liquid plasticizer.

The monoprotic organic acid esters are not particularly limited, and examples include glycolesters obtainable by the reaction of a glycol (e.g. triethylene glycol, tetraethylene glycol, or tripropyleneglycol) and a monoprotic organic acid (e.g. butyric acid, isobutyric acid, caproic acid, 2-ethylbutyric acid, heptanoic acid, n-octylic acid, 2-ethylhexyl acid, pelargonic acid (n-nonylic acid), or decylic acid). In particular, triethylene glycol dicaproate, triethylene glycol di-2-ethylbutyrate, triethylene glycol di-n-octylate, and triethylene glycol di-2-ethylhexylate are preferable.

The polyprotic organic acid esters are not particularly limited, and examples include ester compounds of a polyprotic organic acid (e.g. adipic acid, sebacic acid, or azelaic acid) and a C4 to C8 linear or branched alcohol. In particular, dibutyl sebacate, dioctyl azelate, dibutylcarbitol adipate, and the like are preferable.

The organic ester plasticizers are not particularly limited, and examples include triethylene glycol di-2-ethyl butyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl-carbitol adipate, ethylene glycol di-2-ethyl butyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, dihexyl adipate, dioctyl adipate, hexylcyclohexyl adipate, diisononyl adipate, heptyl nonyl adipate, dibutyl sebacate, oil-modified alkyd sebacate, mixtures of a phosphoric acid ester and an adipic acid ester, mixed adipic acid esters produced from an adipic acid ester, a C4 to C9 alkyl alcohol, and a C4 to C9 cyclic alcohol, and C6 to C8 adipic acid esters such as hexyl adipate.

The organic phosphoric acid plasticizers are not particularly limited, and examples include tributoxyethyl phosphate, isodecylphenyl phosphate, and triisopropyl phosphate.

Preferred among the plasticizers is at least one selected from the group consisting of dihexyladipate (DHA), triethylene glycol di-2-ethylhexanoate (3GO), tetraethylene glycol di-2-ethylhexanoate (4GO), triethylene glycol di-2-ethylbutylate (3GH), tetraethylene glycol di-2-ethylbutylate (4GH), tetraethylene glycol di-n-heptanoate (4G7), and triethylene glycol di-n-heptanoate (3G7).

Furthermore, the plasticizer preferably includes triethylene glycol di-2-ethylhexanoate (3GO), triethylene glycol di-2-ethylbutylate (3GH), tetraethylene glycol di-2-ethylhexanoate (4GO), and/or dihexyladipate (DHA), more preferably includes tetraethylene glycol di-2-ethylhexanoate (4GO) and/or triethylene glycol di-2-ethylhexanoate (3GO), and in particular, more preferably includes triethylene glycol di-2-ethylhexanoate because they are less likely to undergo hydrolysis.

The amount of the plasticizer in the light emitting layer is not particularly limited, but the preferable lower limit is 30 parts by weight for 100 parts by weight of the polyvinyl acetal, and the preferable upper limit is 100 parts by weight. When the amount of the plasticizer is 30 parts by weight or more, the interlayer film for laminated glass has low melt viscosity, which facilitates formation of the interlayer film for laminated glass; when the amount of the plasticizer is 100 parts by weight or less, the interlayer film for laminated glass has high transparency. The more preferable lower limit of the amount of the plasticizer is 35 parts by weight, the more preferable upper limit is 80 parts by weight, the still more preferable lower limit is 45 parts by weight, the still more preferable upper limit is 70 parts by weight, the particularly preferable lower limit is 50 parts by weight, and the particularly preferable upper limit is 63 parts by weight.

The light emitting layer may contain additives such as an antioxidant, a photostabilizer, an antistatic agent, a blue dye, a blue pigment, a green dye, and/or a green pigment as needed.

The light emitting layer preferably contains an antioxidant because it provides high lightfastness. The antioxidant is not particularly limited, and examples include antioxidants having a phenolic structure, sulfur-containing antioxidants, and phosphorus-containing antioxidants.

The antioxidants having a phenolic structure are intended to include antioxidants having a phenolic backbone. Examples of the antioxidants having a phenolic structure include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene,

bis(3,3'-t-butylphenol)butyric acid glycol ester, and pentaerythritoltetrakis[3-(3,5-di-tert-butyl-4-hydroxyphenyl)propionate]. Any of the antioxidants may be used alone, or two or more of these may be used in combination.

The thickness of the light emitting layer is not particularly limited, but the preferable lower limit is 50 μm, and the preferable upper limit is 1000 μm. When the thickness of the light emitting layer is within this range, the light emitting layer emits light with sufficiently high contrast under radiation of light at specific wavelengths. The more preferable lower limit of the thickness of the light emitting layer is 80 μm, the more preferable upper limit is 500 μm, the still more preferable lower limit is 90 μm, and the still more preferable upper limit is 300 μm.

The light emitting layer may extend over all the surfaces of the interlayer film for laminated glass of the present invention, or over a part of the surfaces, or may extend over an entire surface that is perpendicular to the thickness direction of the interlayer film for laminated glass of the present invention, or over a part of the surface. In the case where the light emitting layer extends over a part of a surface, the covered part functions as a light emitting area, and the other part functions as a non-light emitting area, so that information can be displayed only in the light emitting area.

The interlayer film for laminated glass of the present invention includes a first resin layer containing a polyvinyl acetal and an adhesion control agent. The presence of the first resin layer allows for control of the adhesion of the interlayer film for laminated glass. The interlayer film for laminated glass of the present invention includes the light emitting layer and the first resin layer. In order to facilitate control of the adhesion of the interlayer film for laminated glass, to allow for display of an image with a high contrast, and to prevent color changes, it is preferable that the first resin layer is arranged directly or indirectly on one surface of the light emitting layer, and the second resin layer is arranged directly or indirectly on the other surface of the light emitting layer. Additionally, the second resin layer preferably contains a polyvinyl acetal and an adhesion control agent. The first resin layer and the second resin layer preferably constitute the outermost layers of the interlayer film for laminated glass. For example, the first resin layer, the light emitting layer, and the second resin layer are preferably arranged in the stated order, and more preferably, they are laminated in the stated order. Other layer(s) may be inserted between the first resin layer and the light emitting layer, and/or between the second resin layer and the light emitting layer. Examples of the other layer(s) include a layer made of a thermoplastic resin such as polyethylene terephthalate or a polyvinyl acetal. The other layer(s) may be an ultraviolet shielding coat layer containing an ultraviolet absorber. The ultraviolet absorber used in the ultraviolet shielding coat layer may be the same ultraviolet absorber as that used in the light emitting layer.

The polyvinyl acetal in the light emitting layer may be used as the polyvinyl acetal in the first and second resin layers. The polyvinyl acetal in the first and second resin layers may be the same as or different from the polyvinyl acetal in the light emitting layer. The first and second resin layers preferably contain a plasticizer, and the plasticizer in the first and second resin layers may be the same as or different from the plasticizer in the light emitting layer.

For example, in order to ensure that the interlayer film for laminated glass of the present invention has sound insulation properties, the amount (hereinafter, also referred to as amount X) of the plasticizer in the light emitting layer relative to 100 parts by weight of the polyvinyl acetal resin in the light emitting layer is preferably larger than the amount (hereinafter, also referred to as amount Y) of the plasticizer in the first and second resin layer relative to 100 parts by weight of the polyvinyl acetal resin in the first and second resin layer. The amount X is preferably larger than the amount Y by 5 parts by weight or more, more preferably by 10 parts by weight or more, and still more preferably by 15 parts by weight or more. In order to ensure that the interlayer film for laminated glass has much higher penetration resistance, the difference between the amount X and the amount Y is preferably 50 parts by weight or less, more preferably 40 parts by weight or less, and still more preferably 35 parts by weight or less. The difference between the amount X and the amount Y is determined by the following formula:

$$(\text{Difference between amount X and amount Y}) = (\text{Amount X} - \text{Amount Y}).$$

In the case where the following conditions are satisfied: the first and second resin layers contain the polyvinyl acetal and the plasticizer; and the first resin layer is laminated directly or indirectly on one surface of the light emitting layer, and the second resin layer is laminated directly or indirectly on the other surface of the light emitting layer opposite to the one surface, the hydroxyl group content (hereinafter, also referred to as hydroxyl group content X) of the polyvinyl acetal in the light emitting layer is preferably less than the hydroxyl group content (hereinafter, also referred to as hydroxyl group content Y) of the polyvinyl acetal in the first and second rein layers. When the hydroxyl group content X is less than the hydroxyl group content Y, the plasticizer in the light emitting layer is prevented from migrating to the first and second resin layers. Additionally, the light emitting material having a terephthalic acid ester structure in the light emitting layer is prevented from migrating with the plasticizer in the light emitting layer to the first and second resin layers. As a result, color changes of the interlayer film for laminated glass can be prevented even when the interlayer film for laminated glass is stored for a long period of time.

The hydroxyl group content X is more preferably less than the hydroxyl group content Y by 1 mol% or more,

still more preferably by 3 mol% or more, and particularly preferably by 5 mol% or more. In order to facilitate formation of the interlayer film for laminated glass, the preferable upper limit of the difference between the hydroxyl group content X and the hydroxyl group content Y is 20 mol%, the more preferable upper limit is 15 mol%, the still more preferable upper limit is 12 mol%, and the particularly preferable upper limit is 10 mol%. The difference between the hydroxyl group content X and the hydroxyl group content Y is determined by the following formula:

(Difference between hydroxyl group content X and hydroxyl group content Y) = (hydroxyl group content Y - hydroxyl group content X).

In order to prevent the plasticizer from migrating from the light emitting layer to the first and second resin layers, layers for preventing migration of the plasticizer may be laminated between the light emitting layer and the first and second resin layers. Examples of the layers for preventing migration include, a resin layer containing a polyalkylene terephthalate such as polyethylene terephthalate.

The preferable lower limit of the hydroxyl group content X is 10 mol%, the more preferable lower limit is 15 mol%, the still more preferable lower limit is 18 mol%, and the particularly preferable lower limit is 20 mol%. The preferable upper limit of the hydroxyl group content X is 32 mol%, the more preferable upper limit is 30 mol%, the still more preferable upper limit is 28 mol%, and the particularly preferable upper limit is 25 mol%. When the hydroxyl group content X is the lower limit or more, the interlayer film for laminated glass has high penetration resistance; when the content is the upper limit or less, the light emitting layer can be easily formed. The preferable lower limit of the hydroxyl group content Y is 26 mol%, the more preferable lower limit is 28 mol%, the still more preferable lower limit is 30 mol%, the preferable upper limit is 40 mol%, the more preferable upper limit is 36 mol%, the still more preferable upper limit is 34 mol%, and the particularly preferable upper limit is 32 mol%. When the hydroxyl group content Y is the lower limit or more, the interlayer film for laminated glass has high penetration resistance; when the content is the upper limit or less, the first and second resin layers can be easily formed.

The first and second resin layers contain an adhesion control agent. The adhesion control agent is not particularly limited. Preferred are metal salts, and at least one metal salt selected from the group consisting of alkali metal salts, alkaline earth metal salts, and magnesium salts is more preferable. The metal salt preferably contains at least one of potassium and magnesium. The metal salt is more preferably an alkali metal salt of a C1 to C16 organic acid, an alkaline earth metal salt of a C1 to C16 organic acid, or a C1 to C16 organic acid magnesium salt, still more preferably an alkali metal salt of a C2 to C16 organic acid, an alkaline earth metal salt of a C2 to C16 organic acid, or a C2 to C16 organic acid magnesium salt, and particularly preferably a C2 to C16 carboxylic acid magnesium salt or a C2 to C16 carboxylic acid potassium salt. The C2 to C16 carboxylic acid magnesium salt and the C2 to C16 carboxylic acid potassium salt are not particularly limited. Preferred examples include magnesium acetate, potassium acetate, magnesium propionate, potassium propionate, magnesium 2-ethylbutanoate, potassium 2-ethylbutanoate, magnesium 2-ethylhexanonate, and potassium 2-ethylhexanoate. The preferable lower limit of the carbon number of the organic acid is 1, the preferable upper limit is 10, the more preferable lower limit is 2, and the more preferable upper limit is 8.

The amount of the adhesion control agent is not particularly limited, and the preferable lower limit is 0.0005 parts by weight for 100 parts by weight of the polyvinyl acetal, and the preferable upper limit is 0.05 parts by weight. When the amount of the adhesion control agent is 0.0005 parts by weight or more, a laminated glass having higher penetration resistance can be obtained; when the amount of the adhesion control agent is 0.05 parts by weight or less, the interlayer film for laminated glass has high transparency. The more preferable lower limit of the amount of the adhesion control agent is 0.002 parts by weight, and the more preferable upper limit is 0.02 parts by weight.

The total amount of alkali metals, alkaline earth metals, and magnesium in the first and second resin layers is preferably 300 ppm or less in order to ensure that the first and second resin layers have high moisture resistance. For example, the alkali metals, alkaline earth metals, and magnesium may be metals derived from the adhesion control agent, or may be metals derived from a neutralizer used for the synthesis of the polyvinyl acetal. The total amount of alkali metals, alkaline earth metals, and magnesium in the first and second resin layers is more preferably 200 ppm or less, still more preferably 150 ppm or less, and particularly preferably 100 ppm or less. In order to more effectively prevent color changes of the interlayer film for laminated glass, the magnesium element concentration of the first and second resin layers is preferably 150 ppm or less, more preferably 100 ppm or less, still more preferably 50 ppm or less, and particularly preferably 30 ppm or less. The magnesium concentration of the first and second resin layers may be 0 ppm, or may be 0 ppm or more.

In the case where the interlayer film for laminated glass of the present invention is required to have heat shielding properties, any one or two of the light emitting layer and the first and second resin layers, or all of them may contain a heat wave absorbing agent. Alternatively, a heat wave shielding layer containing a heat wave absorbing agent may

further be laminated in addition to the light emitting layer and the first and second resin layers.

The heat wave absorbing agent is not particularly limited, as long as it shields infrared rays. Preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The interlayer film for laminated glass of the present invention may further include a sound insulation layer in order to improve the sound insulation properties. Any one of the light emitting layer and the first and second resin layers may have sound insulation properties to function as a sound insulation layer. Alternatively, a sound insulation layer may further be laminated in addition to the light emitting layer and the first and second resin layers.

The sound insulation layer may be, for example, a layer containing the plasticizer in an amount of 50 to 80 parts by weight for 100 parts by weight of the polyvinyl acetal. The sound insulation layer preferably contains a polyvinyl acetal, and more preferably contains polyvinyl butyral. As for the polyvinyl acetal in the sound insulation layer, the hydroxyl group content is preferably in the range of 20 to 28 mol%. The polyvinyl acetal in the sound insulation layer may be polyvinyl acetal A having an acetyl group content of 8 to 30 mol%, polyvinyl acetal B having an acetyl group content of more than 0 mol% and less than 5 mol% and a degree of acetalization of 70 to 85 mol%, or polyvinyl acetal C having an acetyl group content of 5 mol% or more and less than 8 mol% and a degree of acetalization of 65 to 80 mol%.

The interlayer film for laminated glass of the present invention can be formed by any method without particular limitation. For example, a plasticizer solution containing the plasticizer and the light emitting material having a terephthalic acid ester structure is sufficiently mixed with the polyvinyl acetal into a resin composition for the light emitting layer. Next, a plasticizer solution containing the plasticizer and the adhesion control agent is sufficiently mixed with the polyvinyl acetal into a resin composition for the first and second resin layers. The resin composition for the light emitting layer and the resin composition for the first and second resin layers are coextruded from a coextruder, thereby providing an interlayer film for laminated glass in which the first resin layer, the light emitting layer, and the second resin layer are laminated in the stated order.

Because of the light emitting layer, the interlayer film for laminated glass of the present invention emits light under radiation of light at specific wavelengths. This feature allows for display of information with a high contrast.

Examples of devices for radiation of light at specific wavelengths include a spot light source (LC-8 from Hamamatsu Photonics K.K.), a xenon flush lamp (CW lamp from Heraeus), and a black light (Carry Hand from Iuchi Seieido Co., Ltd.).

A laminated glass including the interlayer film for laminated glass of the present invention between a pair of glass plates is also one aspect of the present invention.

The glass plates may be common transparent glass plates. Examples include plates of inorganic glasses such as float glass plate, polished glass plate, figured glass plate, meshed glass plate, wired glass plate, colored glass plate, heat-absorbing glass plate, heat-reflecting glass plate, and green glass plate. An ultraviolet shielding glass plate including an ultraviolet shielding coat layer on a glass surface may also be used. However, this glass plate is preferably used on the side opposite to the side to be exposed to radiation of light at specific wavelengths. Further examples of the glass plates include organic plastic plates made of polyethylene terephthalate, polycarbonate, polyacrylate, or the like.

The glass plates may include two or more types of glass plates. For example, the laminated glass may be a laminate including the interlayer film for laminated glass of the present invention between a transparent float glass plate and a colored glass plate such as a green glass plate. The glass plates may include two or more glass plates with a different thickness.

- Advantageous Effects of Invention

The present invention provides an interlayer film for laminated glass which produces a high contrast image under light radiation, is less susceptible to color changes, and allows for control of the adhesion. The present invention further provides a laminated glass including the interlayer film for laminated glass.

## DESCRIPTION OF EMBODIMENTS

The following examples are offered to demonstrate the present invention, but are not to be construed as limiting the present invention.

(Example 1)

(1) Resin composition for light emitting layer

A light-emissive plasticizer solution was prepared by mixing 1.5 parts by weight of diethyl-2,5-dihydroxy terephthalate ("diethyl-2,5-dihydroxyterephthalate" from Aldrich), which corresponds to the compound having a structure represented by the formula (1), as the light emitting material having a terephthalic acid ester structure with 60 parts by weight of triethyleneglycol di-2-ethylhexanoate (3GO). The entire amount of the plasticizer solution was combined with 100 parts by weight of polyvinyl butyral (acetyl group content: 13 mol%, hydroxyl group content: 22 mol%, degree of butyralization: 65 mol%) obtained by acetalization of a polyvinyl alcohol (degree of polymerization: 2300) with n-butylaldehyde. The resulting mixture was sufficiently kneaded with mixing rolls. In this manner, a resin composition for the light emitting layer was prepared.

(2) Resin composition for first and second resin layers

A plasticizer solution was prepared by mixing magnesium acetate as the adhesion control agent with 40 parts by weight of triethyleneglycol di-2-ethylhexanoate (3GO). The entire amount of the plasticizer solution was combined with 100 parts by weight of polyvinyl butyral (acetyl group content: 0.9 mol%, hydroxyl group content: 30.6 mol%, degree of butyralization: 68.5 mol%) obtained by acetalization of a polyvinyl alcohol (degree of polymerization: 1700) with n-butylaldehyde. The resulting mixture was sufficiently kneaded with mixing rolls. In this manner, a resin composition for the first and second resin layers was prepared. The amount of the magnesium acetate tetrahydrate added to the triethylene glycol di-2-ethylhexanoate (3GO) was adjusted to control the magnesium element concentration of first and second resin layers to be formed to 70 ppm.

(3) Formation of interlayer film for laminated glass

An interlayer film for laminated glass (30 cm (length) × 15 cm (width)) in which a first resin layer, a light emitting layer, and a second resin layer are laminated in the stated order was formed by coextrusion of the resin composition for the light emitting layer and the resin composition for the first and second resin layers from an coextruder. The thickness of the light emitting layer was 100 μm, and the thicknesses of the first and second resin layers were both 350 μm. The thickness of the interlayer film for laminated glass was 800 μm.

(4) Production of laminated glass

The interlayer film for laminated glass was inserted between a pair of 30 cm (length) × 15 cm (width) clear glass plates (thickness: 2.5 mm) to prepare a laminate. Pressure bonding was carried out by vacuum pressing of the laminate with a vacuum laminator at 90°C for 30 minutes. After pressure bonding, the laminate was further pressure bonded in an autoclave at 140°C at 14 MPa for 20 minutes. In this manner, a laminated glass was obtained.

(Example 2)

An interlayer film for laminated glass and a laminated glass were obtained in the same manner as in Example 1, except that 1.5 parts by weight of diethyl-2,5-diamino terephthalate (from Aldrich), which corresponds to the compound having a structure represented by the formula (2), was used as the light emitting material having a terephthalic acid ester structure instead of 1.5 parts by weight of diethyl-2,5-dihydroxyterephthalate ("diethyl-2,5-dihydroxyterephthalate" from Aldrich), which corresponds to the compound having a structure represented by the formula (1).

(Examples 3 to 25 and Comparative Examples 1 to 5)

An interlayer film for laminated glass and a laminated glass were obtained in the same manner as in Example 1, except that the resin compositions for the light emitting layer and for the first and second resin layers, and the thickness were changed as shown in Tables 2 to 4.

(Evaluation)

The laminated glasses obtained in Examples 1 to 25 and Comparative Examples 1 to 5 were evaluated as follows. Tables 1 to 4 show the results.

(1) Evaluation of light emission

An entire surface of each of the laminated glasses was irradiated with light from a high power xenon light source ("REX-250" from Asahi Spectra Co., Ltd., emission at 405 nm) in a dark room. The laminated glasses were visually observed, and those emitting light from a center portion thereof were given a rating of "○", and those which did not emit

light were given a rating of "x".

The laminated glasses of Examples 3 to 25 and Comparative Examples 1 to 5 were evaluated as follows. The entire surface of each laminated glass was further irradiated in a dark room with light from the high power xenon light source ("REX-250" from Asahi Spectra Co., Ltd., emission at 405 nm) that was spaced 10 cm from the laminated glass surface in the perpendicular direction, and measured for luminance with a luminance meter ("SR-3AR" from TOPCON TECHNOHOUSE CORPORATION) that was positioned at an angle of 45 degrees with respect to the laminated glass surface being irradiated with light, and spaced a minimum distance of 35 cm from the laminated glass surface.

(2) Evaluation of color change

The laminated glasses (5 cm (length) × 5 cm (width)) were measured for the yellow index value (YI value) with a spectrophotometer (U-4100 from Hitachi High-Technologies Corporation) in accordance with JIS Z 8722. Their YI values were evaluated as follows: when the YI value is 0 or more and 20 or less, a rating of "○" was given; and when the YI value is more than 20, a rating of "×" was given.

For the laminated glasses of Examples 3 to 25, their yellow index values (YI values) are shown.

(3) Evaluation of adhesion (Measurement of pummel value of interlayer film for laminated glass)

The laminated glass obtained in Example 1 was stored at -18°C ± 0.6°C for 16 hours, and a center portion (150 mm (length) × 150 mm (width)) of the laminated glass was shattered with a hammer having a 0.45 kg head into glass pieces with a size of 6 mm or smaller. Areas of the film from which glass pieces fell off were measured for exposure degree, and a pummel value was assigned based on the classifications indicated in Table 5. A pummel value of 2 to 9 was evaluated as "O", and a pummel value of 1 or less or of 10 was evaluated as "×".

As for the laminated glasses of Examples 3 to 25 and Comparative Examples 1 to 5, their pummel values are shown.

[Table 1]

<table>
<tr><th colspan="4"></th><th>Example 1</th><th>Example 2</th></tr>
<tr><td rowspan="5">Light emitting layer</td><td rowspan="4">Composition (parts by weight)</td><td colspan="2">Polyvinyl butyral</td><td>100</td><td>100</td></tr>
<tr><td colspan="2">Triethylene glycol di-2-ethylhexanoate</td><td>60</td><td>60</td></tr>
<tr><td rowspan="2">Light emitting material having terephthalic acid ester structure</td><td>Diethyl-2,5-dihydroxy terephthalate</td><td>1.5</td><td>-</td></tr>
<tr><td>Diethyl-2,5-diamino terephthalate</td><td>-</td><td>1.5</td></tr>
<tr><td colspan="2">Magnesium concentration</td><td>ppm</td><td>0</td><td>0</td></tr>
<tr><td rowspan="3">First and second resin layers</td><td rowspan="2">Composition (parts by weight)</td><td colspan="2">Polyvinyl butyral</td><td>100</td><td>100</td></tr>
<tr><td colspan="2">Triethylene glycol di-2-ethylhexanoate</td><td>40</td><td>40</td></tr>
<tr><td colspan="2">Magnesium concentration (derived from magnesium acetate)</td><td>ppm</td><td>70</td><td>70</td></tr>
<tr><td rowspan="3">Evaluation</td><td colspan="3">Evaluation of light emission</td><td>○</td><td>○</td></tr>
<tr><td colspan="3">Evaluation of color change</td><td>○</td><td>○</td></tr>
<tr><td colspan="3">Evaluation of adhesion</td><td>○</td><td>○</td></tr>
</table>

[Table 2]

| | | | | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Light emitting layer | Polyvinyl butyral | | Parts by weight | 100 | 100 | 100 | 100 | 100 | 100 | 100 | 100 | 100 | 100 | 100 |
| | | | Degree of polymerization | 2300 | 2300 | 2300 | 2300 | 2300 | 2300 | 2300 | 2300 | 2300 | 2300 | 2300 |
| | | | Hydroxyl group content (mol%) | 22 | 22 | 22 | 22 | 22 | 22 | 22 | 22 | 22 | 22 | 22 |
| | | | Degree of butyralization (mol%) | 65 | 65 | 65 | 65 | 65 | 65 | 65 | 65 | 65 | 65 | 65 |
| | | | Acetyl group content (mol%) | 13 | 13 | 13 | 13 | 13 | 13 | 13 | 13 | 13 | 13 | 13 |
| | Plasticizer (3GO) | | Parts by weight | 60 | 60 | 60 | 60 | 60 | 60 | 60 | 60 | 60 | 60 | 60 |
| | Light emitting material having terephthalic acid ester structure Diethyl-2,5-dihydroxy terephthalate | | Parts by weight | 1.5 | 1.5 | 1.5 | 1.5 | 1.5 | 1.5 | 0.5 | 5 | 1.5 | 1.5 | 1.5 |
| | Magnesium acetate tetrahydrate | | Parts by weight | 0 | 0 | 0 | 0 | 0 | 0.049 | 0 | 0 | 0.074 | 0.025 | 0.006 |
| | Magnesium concentration | | ppm | 0 | 0 | 0 | 0 | 0 | 40 | 0 | 0 | 60 | 20 | 5 |
| | Thickness of light emitting layer | | μm | 100 | 100 | 100 | 100 | 100 | 100 | 100 | 100 | 100 | 100 | 100 |
| First and second resin layers | Polyvinyl butyral | | Parts by weight | 100 | 100 | 100 | 100 | 100 | 100 | 100 | 100 | 100 | 100 | 100 |
| | | | Degree of polymerization | 1700 | 1700 | 1700 | 1700 | 1700 | 1700 | 1700 | 1700 | 1700 | 1700 | 1700 |
| | | | Hydroxyl group content (mol%) | 30.6 | 30.6 | 30.6 | 30.6 | 30.6 | 30.6 | 30.6 | 30.6 | 30.6 | 30.6 | 30.6 |
| | | | Degree of butyralization (mol%) | 68.5 | 68.5 | 68.5 | 68.5 | 68.5 | 68.5 | 68.5 | 68.5 | 68.5 | 68.5 | 68.5 |
| | | | Acetyl group content (mol%) | 0.9 | 0.9 | 0.9 | 0.9 | 0.9 | 0.9 | 0.9 | 0.9 | 0.9 | 0.9 | 0.9 |
| | Plasticizer (3GO) | | Parts by weight | 40 | 40 | 40 | 40 | 40 | 40 | 40 | 40 | 40 | 40 | 40 |
| | Adhesion control agent | Potassium acetate | Parts by weight | 0 | 0.056 | 0.084 | 0.028 | 0.042 | 0.056 | 0.056 | 0.056 | 0 | 0 | 0 |
| | | Potassium 2-ethylhexanoate | Parts by weight | 0 | 0 | 0 | 0.052 | 0.078 | 0 | 0 | 0 | 0 | 0 | 0 |
| | | Magnesium acetate tetrahydrate | Parts by weight | 0.11 | 0 | 0 | 0 | 0 | 0 | 0 | 0 | 0.11 | 0.11 | 0.11 |
| | Potassium concentration | | ppm | 0 | 160 | 240 | 160 | 240 | 160 | 160 | 160 | 0 | 0 | 0 |
| | Magnesium concentration | | ppm | 90 | 0 | 0 | 0 | 0 | 0 | 0 | 0 | 90 | 90 | 90 |
| | Thickness of each of first and second resin layers | | μm | 350 | 350 | 350 | 350 | 350 | 350 | 350 | 350 | 350 | 350 | 350 |
| Evaluation | Evaluation of light emission | | Luminance ($cd/m^2$) | 715 | 710 | 716 | 720 | 725 | 710 | 690 | 950 | 700 | 715 | 720 |
| | Evaluation of color change | | YI | 7 | 7 | 7 | 7 | 7 | 10 | 4 | 8.5 | 14 | 8.5 | 7.5 |
| | Evaluation of adhesion | | Pummel value | 4 | 4 | 3 | 5 | 4 | 4 | 4 | 4 | 4 | 4 | 4 |

[Table 3]

| | | | | Example 14 | Example 15 | Example 16 | Example 17 | Example 18 | Example 19 | Example 20 | Example 21 |
|---|---|---|---|---|---|---|---|---|---|---|---|
| Light emitting layer | Polyvinyl butyral | | Parts by weight | 100 | 100 | 100 | 100 | 100 | 100 | 100 | 100 |
| | | | Degree of polymerization | 2300 | 2300 | 2300 | 2300 | 2300 | 2300 | 2300 | 1700 |
| | | | Hydroxyl group content (mol%) | 16 | 24 | 22 | 22 | 22 | 22 | 22 | 30.6 |
| | | | Degree of butyralization (mol%) | 71 | 60 | 65 | 65 | 65 | 65 | 65 | 68.5 |
| | | | Acetyl group content (mol%) | 13 | 16 | 13 | 13 | 13 | 13 | 13 | 0.9 |
| | Plasticizer (3GO) | | Parts by weight | 60 | 60 | 60 | 60 | 70 | 50 | 45 | 40 |
| | Light emitting material having terephthalic acid ester structure | Diethyl-2,5-dihydroxy terephthalate | Parts by weight | 1.5 | 1.5 | 1.5 | 1.5 | 1.5 | 1.5 | 1.5 | 1.5 |
| | | Dimethyl-2,5-dihydroxy terephthalate | Parts by weight | 0 | 0 | 0 | 0 | 0 | 0 | 0 | 0 |
| | Magnesium acetate tetrahydrate | | Parts by weight | 0 | 0 | 0 | 0 | 0 | 0 | 0 | 0 |
| | Magnesium concentration | | ppm | 0 | 0 | 0 | 0 | 0 | 0 | 0 | 0 |
| | Thickness of light emitting layer | | μm | 100 | 100 | 100 | 100 | 100 | 100 | 100 | 100 |
| First and second resin layers | Polyvinyl butyral | | Parts by weight | 100 | 100 | 100 | 100 | 100 | 100 | 100 | 100 |
| | | | Degree of polymerization | 1700 | 1700 | 1700 | 1700 | 1700 | 1700 | 1700 | 1700 |
| | | | Hydroxyl group content (mol%) | 30.6 | 30.6 | 30.7 | 30.1 | 30.6 | 30.6 | 30.6 | 30.6 |
| | | | Degree of butyralization (mol%) | 68.5 | 68.5 | 68.5 | 68.3 | 68.5 | 68.5 | 68.5 | 68.5 |
| | | | Acetyl group content (mol%) | 0.9 | 0.9 | 0.8 | 1.6 | 0.9 | 0.9 | 0.9 | 0.9 |
| | Plasticizer (3GO) | | Parts by weight | 40 | 40 | 40 | 40 | 40 | 40 | 40 | 40 |
| | Adhesion control agent | Potassium acetate | Parts by weight | 0 | 0.056 | 0 | 0 | 0 | 0 | 0 | 0 |
| | | Potassium 2-ethylhexanoate | Parts by weight | 0 | 0 | 0 | 0 | 0 | 0 | 0 | 0 |
| | | Potassium formate | Parts by weight | 0 | 0 | 0 | 0 | 0 | 0 | 0 | 0 |
| | | Potassium propionate | Parts by weight | 0 | 0 | 0 | 0 | 0 | 0 | 0 | 0 |
| | | Magnesium acetate tetrahydrate | Parts by weight | 0.11 | 0 | 0.11 | 0.11 | 0.11 | 0.11 | 0.11 | 0.11 |
| | Potassium concentration | | ppm | 0 | 160 | 0 | 0 | 0 | 0 | 0 | 0 |
| | Magnesium concentration | | ppm | 90 | 0 | 90 | 90 | 90 | 90 | 90 | 90 |
| | Thickness of each of first and second resin layers | | μm | 350 | 350 | 350 | 350 | 350 | 350 | 350 | 350 |
| Evaluation | Evaluation of light emission | | Luminance ($cd/m^2$) | 729 | 725 | 723 | 726 | 719 | 720 | 726 | 729 |
| | Evaluation of color change | | Initial YI | 7 | 7 | 7 | 7 | 7 | 7 | 7 | 7 |
| | Evaluation of adhesion | | Pummel value | 4 | 4 | 4 | 4 | 4 | 4 | 4 | 4 |

[Table 4]

| Layer | Component | | Unit | Example 22 | Example 23 | Example 24 | Example 25 | Comparative Example 1 | Comparative Example 2 | Comparative Example 3 | Comparative Example 4 | Comparative Example 5 |
|---|---|---|---|---|---|---|---|---|---|---|---|---|
| Light emitting layer | Polyvinyl butyral | | Parts by weight | 100 | 100 | 100 | 100 | 100 | 100 | 100 | 100 | 100 |
| | | | Degree of polymerization | 2300 | 2300 | 2300 | 3000 | 1700 | 2300 | 2300 | 2300 | 2300 |
| | | | Hydroxyl group content (mol%) | 22 | 22 | 22 | 22 | 30.6 | 22 | 22 | 22 | 22 |
| | | | Degree of butyralization (mol%) | 65 | 65 | 65 | 65 | 68.5 | 65 | 65 | 65 | 65 |
| | | | Acetyl group content (mol%) | 13 | 13 | 13 | 13 | 0.9 | 13 | 13 | 13 | 13 |
| | Plasticizer (3GO) | | Parts by weight | 60 | 60 | 60 | 60 | 40 | 60 | 60 | 60 | 60 |
| | Light emitting material having terephthalic acid ester structure | Diethyl-2,5-dihydroxy terephthalate | Parts by weight | 1.5 | 1.5 | 0 | 1.5 | 0.5 | 1.5 | 1.5 | 0.5 | 5 |
| | | Dimethyl-2,5-dihydroxy terephthalate | Parts by weight | 0 | 0 | 1.5 | 0 | 0 | 0 | 0 | 0 | 0 |
| | Magnesium acetate tetrahydrate | | Parts by weight | 0 | 0 | 0 | 0 | 0.11 | 0.11 | 0.11 | 0.11 | 0.11 |
| | Magnesium concentration | | ppm | 0 | 0 | 0 | 0 | 90 | 90 | 90 | 90 | 90 |
| | Thickness of light emitting layer | | μm | 100 | 100 | 100 | 100 | 800 | 100 | 100 | 100 | 100 |
| First and second resin layers | Polyvinyl butyral | | Parts by weight | 100 | 100 | 100 | 100 | - | 100 | 100 | 100 | 100 |
| | | | Degree of polymerization | 1700 | 1700 | 1700 | 1700 | - | 1700 | 1700 | 1700 | 1700 |
| | | | Hydroxyl group content (mol%) | 30.6 | 30.6 | 30.6 | 30.6 | - | 30.6 | 30.6 | 30.6 | 30.6 |
| | | | Degree of butyralization (mol%) | 68.5 | 68.5 | 68.5 | 68.5 | - | 68.5 | 68.5 | 68.5 | 68.5 |
| | | | Acetyl group content (mol%) | 0.9 | 0.9 | 0.9 | 0.9 | - | 0.9 | 0.9 | 0.9 | 0.9 |
| | Plasticizer (3GO) | | Parts by weight | 40 | 40 | 40 | 40 | - | 40 | 40 | 40 | 40 |
| | Adhesion control agent | Potassium acetate | Parts by weight | 0 | 0 | 0.056 | 0.056 | - | 0 | 0 | 0.056 | 0.056 |
| | | Potassium 2-ethylhexanoate | Parts by weight | 0 | 0 | 0 | 0 | - | 0 | 0 | 0 | 0 |
| | | Potassium formate | Parts by weight | 0.047 | 0 | 0 | 0 | - | 0 | 0 | 0 | 0 |
| | | Potassium propionate | Parts by weight | 0 | 0.063 | 0 | 0 | - | 0 | 0 | 0 | 0 |
| | | Magnesium acetate tetrahydrate | Parts by weight | 0 | 0 | 0 | 0 | - | 0.086 | 0.11 | 0 | 0 |
| | Potassium concentration | | ppm | 160 | 160 | 160 | 160 | - | 0 | 0 | 160 | 160 |
| | Magnesium concentration | | ppm | 0 | 0 | 0 | 0 | - | 70 | 90 | 0 | 0 |
| | Thickness of each of first and second resin layers | | μm | 350 | 350 | 350 | 350 | - | 350 | 350 | 350 | 350 |
| Evaluation | Evaluation of light emission | | Luminance ($cd/m^2$) | 721 | 722 | 725 | 725 | 910 | 718 | 719 | 689 | 940 |
| | Evaluation of color change | | Initial YI | 7 | 7 | 7 | 7 | 30 | 21 | 30 | 22 | 35 |
| | Evaluation of adhesion | | Pummel value | 4 | 4 | 4 | 4 | 4 | 5 | 4 | 4 | 4 |

[Table 5]

| Exposure degree of interlayer film (area%) | Pummel value |
|---|---|
| 90<Exposure degree≦100 | 0 |

(continued)

| Exposure degree of interlayer film (area%) | Pummel value |
|---|---|
| 85<Exposure degree≦90 | 1 |
| 60<Exposure degree≦85 | 2 |
| 40<Exposure degree≦60 | 3 |
| 20<Exposure degree≦40 | 4 |
| 10<Exposure degree≦20 | 5 |
| 5<Exposure degree≦10 | 6 |
| 2<Exposure degree≦5 | 7 |
| Exposure degree≦2 | 8 |

INDUSTRIAL APPLICABILITY

The present invention provides an interlayer film for laminated glass which produces a high contrast image under light radiation, is less susceptible to color changes, and allows for control of the adhesion. The present invention further provides a laminated glass including the interlayer film for laminated glass.

## Claims

**1.** An interlayer film for laminated glass comprising:

a light emitting layer; and
a first resin layer directly or indirectly arranged on one surface of the light emitting layer,
the light emitting layer containing a polyvinyl acetal and a light emitting material having a terephthalic acid ester structure, and having a magnesium element concentration of 80 ppm or less,
the first resin layer containing a polyvinyl acetal and an adhesion control agent.

**2.** The interlayer film for laminated glass according to claim 1,
wherein the light emitting material having a terephthalic acid ester structure is a compound having a structure represented by the following formula (1) or a compound having a structure represented by the following formula (2):

[Chem. 1]

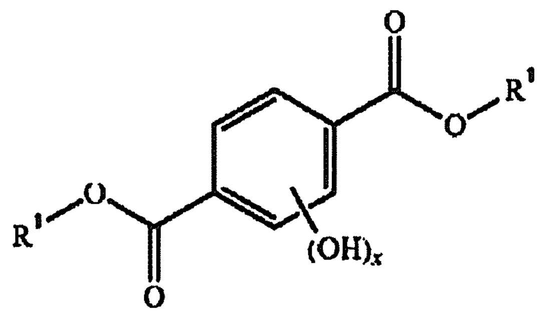

(1)

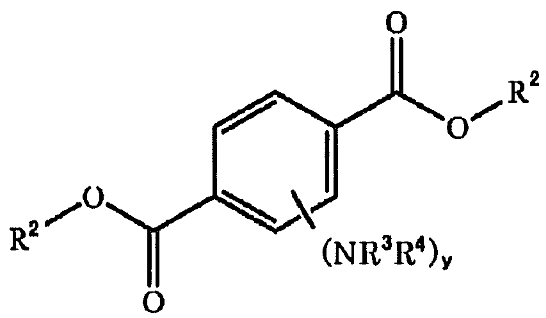

(2)

in the formula (1), $R^1$ being an organic group, and x being 1, 2, 3 or 4, and
in the formula (2), $R^2$ being an organic group, $R^3$ and $R^4$ individually being a hydrogen atom or an organic group, and y being 1, 2, 3 or 4.

**3.** The interlayer film for laminated glass according to claim 1 or 2,
wherein the light emitting layer comprises 0.001 to 15 parts by weight of the light emitting material having a terephthalic acid ester structure for 100 parts by weight of the polyvinyl acetal.

**4.** The interlayer film for laminated glass according 1, 2 or 3,
wherein the magnesium element concentration of the light emitting layer is 75 ppm or less.

**5.** The interlayer film for laminated glass according to claim 1, 2, 3 or 4,
wherein the first resin layer is laminated on one surface of the light emitting layer.

**6.** The interlayer film for laminated glass according to claim 1, 2, 3, 4 or 5,
wherein the polyvinyl acetal in the light emitting layer has a lower hydroxyl group content than the polyvinyl acetal in the first resin layer.

**7.** The interlayer film for laminated glass according to claim 1, 2, 3, 4, 5 or 6,
wherein the first resin layer has a magnesium element concentration of 50 ppm or less.

**8.** The interlayer film for laminated glass according to claim 1, 2, 3, 4, 5, 6 or 7, further comprising a second resin layer directly or indirectly arranged on the other surface of the light emitting layer,
the second resin layer containing a polyvinyl acetal and an adhesion control agent.

**9.** The interlayer film for laminated glass according to claim 8,
wherein the second resin layer is laminated on the other surface of the light emitting layer.

**10.** The interlayer film for laminated glass according to claim 8 or 9,
wherein the polyvinyl acetal in the light emitting layer has a lower hydroxyl group content than the polyvinyl acetal in the second resin layer.

**11.** The interlayer film for laminated glass according to claim 8, 9 or 10,

wherein the second resin layer has a magnesium element concentration of 50 ppm or less.

**12.** The interlayer film for laminated glass according to claim 1, 2, 3, 4, 5, 6, 7, 8, 9, 10 or 11, wherein the adhesion control agent is at least one metal salt selected from the group consisting of alkali metal salts, alkaline earth metal salts, and magnesium salts.

**13.** A laminated glass comprising a laminate including the interlayer film for laminated glass according to claim 1, 2, 3, 4, 5, 6, 7, 8, 9, 10, 11 or 12 between a pair of glass plates.

**INTERNATIONAL SEARCH REPORT**

International application No. PCT/JP2013/076531

A. CLASSIFICATION OF SUBJECT MATTER
*C03C27/12*(2006.01)i, *B32B17/10*(2006.01)i, *B32B27/30*(2006.01)i, *C08K5/12*(2006.01)i, *C08L29/14*(2006.01)i

According to International Patent Classification (IPC) or to both national classification and IPC

B. FIELDS SEARCHED

Minimum documentation searched (classification system followed by classification symbols)
C03C27/12, B32B17/10, B32B27/30, C08K5/12, C08L29/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
Thomson Innovation

C. DOCUMENTS CONSIDERED TO BE RELEVANT

| Category* | Citation of document, with indication, where appropriate, of the relevant passages | Relevant to claim No. |
|---|---|---|
| A | JP 2011-178655 A (Sekisui Chemical Co., Ltd.), 15 September 2011 (15.09.2011), the entire specification (Family: none) | 1-13 |
| A | WO 2011/042384 A1 (SAINT-GOBAIN GLASS FRANCE), 14 April 2011 (14.04.2011), the entire description & US 2012/0299328 A1 & EP 2485893 A & DE 102009044181 A & CN 102612433 A | 1-13 |
| A | WO 2012/072950 A1 (SAINT-GOBAIN GLASS FRANCE), 07 June 2012 (07.06.2012), the entire description & FR 2968240 A & CA 2817481 A & CN 103228594 A | 1-13 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 November, 2013 (05.11.13) | 19 November, 2013 (19.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/076531

C (Continuation). DOCUMENTS CONSIDERED TO BE RELEVANT

| Category* | Citation of document, with indication, where appropriate, of the relevant passages | Relevant to claim No. |
|---|---|---|
| A | WO 2012/010444 A1 (SAINT-GOBAIN GLASS FRANCE), 26 January 2012 (26.01.2012), the entire description & EP 2409833 A1 & CN 103228438 A & KR 10-2013-0062323 A | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4502525T B
- WO 2010139889 A